# EUROPEAN PATENT APPLICATION

(11) **EP 3 070 131 A1**
(43) Date of publication of application: **21.09.2016**
(21) Application number: 14862293.9
(22) Date of filing: 30.10.2014
(51) Int. Cl.: C09D 11/16, B43K 7/00, B43K 8/02, C09D 11/18

(54) **AQUEOUS INK COMPOSITION FOR WRITING TOOLS**

(30) Priority: 15.11.2013 JP 2013236560
(71) Applicant: Mitsubishi Pencil Co., Ltd., Tokyo 140-8537 (JP)
(72) Inventor: TAKEUCHI Yoji, Yokohama-shi Kanagawa 221-8550 (JP); NISHIJIMA Chihiro, Yokohama-shi Kanagawa 221-8550 (JP); SAKANE Noriko, Yokohama-shi Kanagawa 221-8550 (JP)
(74) Representative: Vossius & Partner Patentanwälte Rechtsanwälte mbB
(86) International application number: PCT/JP2014/078944
(87) International publication number: WO 2015/072344

(57) **Abstract**

Provided is an aqueous ink composition for a writing instrument which is inhibited in time-dependent heterogeneity (difference in viscosity between up- and down-sides) in viscosity distribution in an aqueous ink composition containing an oxidized cellulose and which is excellent in time-dependent viscosity distribution stability. The above aqueous ink composition for a writing instrument includes, for example, an aqueous rink composition containing at least 0.05 to 1.5% by mass of an oxidized cellulose and 0.001 to 30% by mass of sugars having a weight average molecular weight of 5000 or less.

## Description

### Technical Field

The present invention relates to an aqueous ink composition for writing instruments containing oxidized cellulose.

### Background Art

Natural compounds, semisynthetic compounds obtained by chemical modification of natural compounds, and synthetic compounds chemically synthesized from petrochemical starting materials have so far been known as thickeners showing thixotropy which are used for ink compositions for writing instruments.

Among thickeners, products obtained by physically fine processed cellulose itself are known as a natural thickener originating from cellulose, and cellulose such as powder cellulose, fermented cellulose (bacterial cellulose), and oxidized cellulose are known.

Known as aqueous ink compositions utilizing the above celluloses are, for example, 1) aqueous ink compositions characterized by containing alkali metal salts or ammonium salts of carboxymethyl cellulose (CMC) having an etherification degree of 1.5 or more (refer to, for example, patent document 1), 2) ink compositions for aqueous ink ballpoint pens characterized by comprising at least water, a colorant and fermented cellulose (refer to, for example, patent document 2), and 3) aqueous ink compositions characterized by containing oxidized cellulose (cellulose fibers) having specific physical properties, a colorant and at least one of masking agent, and water (refer to, for example, patent document 3).

However, the alkali metal salts or the ammonium salts of CMC shown in patent document 1 described above is viscose and cannot improve time-dependent dispersion stability of pigments and the like. Also, the fermented cellulose used in the ink compositions for aqueous ink ballpoint pens shown in patent document 2 described above comprises fine fibrous particles and is added for enhancing the dry-up performance by forming a soft resin film (film of the cellulose fibers) at the tip of the pen, and a conventional thixotropy imparting agent (such as xanthane gum) is further used in combination for controlling the ink viscosity and is not added for improving time-dependent dispersion stability of pigments and the like.

The oxidized cellulose contained in the aqueous ink compositions described in patent document 3 described above is more excellent than conventional thickeners and gelling agents and does not depend on the atmospheric temperature and physical properties and the like of the colorant and the masking agent, and the composition is excellent in dispersibility of the colorant and the masking agent to present thereof from settling and separating in storing. However, the existing situation is that the composition has property of being liable to bring about an heterogeneity (difference in viscosity between up- and down-sides) in viscosity distribution with the passage of time and that the composition involves the problem in the point that the composition cannot yet achieve satisfactory time-dependent viscosity distribution stability, that is, time-dependent dispersion stability.

### Conventional Art Documents

### Patent documents

Patent document 1: Japanese Patent Application Laid-Open No. Sho 62-124170 (claims, examples and others)
Patent document 2: Japanese Patent Application Laid-Open No. 2013-91730 (claims, examples and others)
Patent document 3: Japanese Patent Application Laid-Open No. 2013-181167 (claims, examples and others)

### Disclosure of the Invention

### Problems to be solved by the Invention

In light of the problems on the conventional arts described above, the present invention tries to solve the problems, and an object thereof is to provide an aqueous ink composition for a writing instrument which inhibits time-dependent heterogeneity (difference in viscosity between up- and down-sides) in viscosity distribution regarded as the problem of an aqueous ink composition, for a writing instrument observed when oxidized cellulose is used and which is excellent in time-dependent viscosity distribution stability.

### Means for solving the Problems

In light of the conventional problems and the like described above, intense researches repeated by the present inventors have resulted in finding that an aqueous ink composition for a writing instrument which meets the object described above is obtained by using sugars having specific physical properties in combination with oxidized cellulose. Thus, the present invention has been come to complete.

That is, the present invention resides in the following items (1) to (4).
(1) An aqueous ink composition for a writing instrument comprising at least 0.05 to 1.5% by mass of an oxidized cellulose and 0.001 to 30% by mass of sugars having a weight average molecular weight of 5000 or less.
(2) The aqueous ink composition for a writing instrument as described in the above item (1), wherein the sugars are non-reducing sugars.
(3) The aqueous ink composition for a writing instrument as described in the above item (2), wherein the non-reducing sugars are sugar alcohols.
(4) A writing instrument charged with the aqueous ink composition for a writing instrument as described in any one of the above items (1) to (3).

### Effect of the Invention

According to the present invention, provided is an aqueous ink composition for a writing instrument which inhibits time-dependent heterogeneity (difference in viscosity between up- and down-sides) in viscosity distribution regarded as the problem of an aqueous ink composition for a writing instrument when oxidized cellulose is used and which is excellent in time-dependent viscosity distribution stability.

### DESCRIPTION of THE PREFERRED EMBODIMENTS

The embodiment of the present invention shall be explained below in detail.

The aqueous ink composition for a writing instrument according to the present invention is characterized by comprising at least 0.05 to 1.5% by mass of an oxidized cellulose and 0.001 to 30% by mass of sugars having a weight average molecular weight of 5000 or less.

### <Oxidized cellulose>

The oxidized cellulose used in the present invention shall not specifically be restricted as long as the cellulose has a cellulose I form crystal structure and is obtained by modifying a part of hydroxyl groups (-OH groups) of β-glucose constituting cellulose [(C₆H₁₀O₅)ₙ: natural polymer in which numbers of β-glucose molecules are linearly polymerized via glycosidic bonds] by at least one functional group of an aldehyde group (-CHO group) and a carboxyl group (-COOH group). It includes, for example, cellulose in which hydroxyl groups (-OH groups) at least in a C6-position of the β-glucose described above are oxidized and modified to an aldehyde group (-CHO group) and a carboxyl group (-COOH group).

The oxidized cellulose used in the present invention comprises fibers obtained by oxidizing the surface of a naturally originating cellulose solid starting material having I form crystal structure and finely pulverizing the cellulose to a nano size.

In general, in the naturally originating cellulose which is the starting material, nanofibers called microfibrils are turned into bundles almost without exception to assume a higher order structure, and therefore the cellulose cannot readily be pulverized to a nano size as it is and dispersed. In the oxidized cellulose used in the present invention, a part of hydroxyl groups of the cellulose fibers is oxidized to introduce thereinto an aldehyde group and a carboxyl group, whereby the cellulose is reduced in a hydrogen bond between the surfaces which is a driving force for a strong cohesive force between the microfibrils, and the oxidized cellulose is subjected to dispersion treatment and pulverized to a nano size.

In the present invention, the effects of the present invention can be exerted by using the oxidized cellulose having physical properties described above and sugars having specific physical properties described later, and the oxidized cellulose having a number average fiber diameter of 2 to 150 nm is preferred.

From the viewpoint of dispersion stability, the oxidized cellulose has more preferably a number average fiber diameter of 3 to 80 nm. Controlling a number average fiber diameter of the oxidized cellulose to 2 nm or more makes it possible to allow the oxidized cellulose to exert a function of a dispersion medium, and on the contrary, controlling the number average fiber diameter to 150 nm or less makes it possible to further enhance dispersion stability of the cellulose fibers themselves.

In the present invention, the number average fiber diameter described above can be measured, for example, in the following procedure. That is, the sample prepared by diluting cellulose fibers by adding water thereto is subjected to dispersion treatment, and the dispersion is cast on a grid coated by a carbon film subjected to hydrophilic treatment and observed under a transmission electron microscope (TEM). The number average fiber diameter can be measured and calculated from the image thus obtained.

It can be identified, for example, by the presence of typical peaks at two positions in the vicinity of 2theta = 14 to 17° and the vicinity of 2theta = 22 to 23° in a diffraction profile obtained by measuring a large angle X-ray diffraction image that cellulose constituting the specific cellulose fibers described above has I form crystal structure originating from the natural product.

The oxidized cellulose used is the present invention can be produced, for example, by at least three steps of an oxidation reaction step in which a natural cellulose used for a starting material is oxidized by the reaction with a co-oxidant in water using an N-oxyl compound as an oxidation catalyst to obtain reaction product fibers, a work up step in which impurities are removed to obtain reaction product fibers impregnated with water, and a dispersion step in which the reaction product fibers impregnated with water are dispersed in a solvent.

In the oxidation reaction step described above, a dispersion obtained by dispersing a natural cellulose in water is prepared. In the present case, the natural cellulose means purified celluloses isolated from plants, animals, and biosynthetic celluloses such as bacterially produced gels. To be more specific, capable of being listed are softwood tree pulps, hardwood tree pulps, cotton pulps such as cotton linters and cotton lints, non-wood pulps such as straw pulps, and bagasse pulps, BC, cellulose isolated from sea squirt, celluloses isolated from seaweeds, and the like. However, the cellulose shall not be restricted thereto. The natural cellulose can be enhanced in reaction efficiency and productivity by subjecting preferably to treatment such as beating for raising the surface area. Further, when the natural cellulose stored in the condition of "never dry" after isolated and work up is used, it can still be enhanced in a reaction efficiency since the converged body of the microfibrils stays in a state in which the natural cellulose is liable to be swollen, and the natural cellulose can preferably be reduced in a number average fiber diameter after subjected to pulverizing treatment.

A dispersant for the natural cellulose in the reaction is water, and a concentration of the natural cellulose in a reaction aqueous solution is optional if the concentration is a concentration in which the reagent can sufficiently be diffused, and the concentration is usually about 5% or less based on a weight of the reaction aqueous solution.

Also, a lot of N-oxyl compounds which can be used as an oxidizing catalyst for cellulose are reported (article entitled "Nitroxide-mediated oxidation of cellulose using TEMPO derivatives: HPSEC and NMR analyses of the oxidized products" by I. Shibata and A. Isogai, Cellulose, Vol. 10, pp. 335 to 341, 2003), and TEMPO (2,2,6,6-tetramethyl-1-piperidine-N-oxyl), 4-acetamide-TEMPO, 4-carboxy-TEMPO, and 4-phosphonoxy-TEMPO are particularly preferred in terms of a reaction rate in water at ambient temperature. A catalytic amount is satisfactory for an addition amount of the above N-oxyl compounds, and N-oxyl compounds are added to a reaction aqueous solution in a range of preferably 0.1 to 4 mmol/l, more preferably 0.2 to 2 mmol/l.

Hypohalous acid or salts thereof, halous acid or salts thereof, perhalogen acid or salts thereof, hydrogen peroxide, organic peracids, and the like can be used as the co-oxidant in the present invention, and alkali metal hypohalides, for example, sodium hypochlorite and sodium hypobromite are preferred. When sodium hypochlorite is used, the reaction is allowed to proceed preferably in the presence of alkali metal bromide, for example, sodium bromide in terms of the reaction rate. An addition amount of the above alkali metal bromide is about 1- to 40-fold molar amount, preferably about 10- to 20-food molar amount based on the N-oxyl compound. In general, an addition amount of the co-oxidant is selected preferably in a range of about 0.5 to 8 mmol based on 1 g of the natural cellulose, and the reaction is completed in about 5 to 120 minutes, within 240 minutes at the longest.

A pH of the reaction aqueous solution is maintained preferably in a range of about 8 to 11. A temperature of the aqueous solution is optional in a range of about 4 to 40°C, and the reaction can be carried out at room temperature and does not require to be controlled particularly in temperature.

Compounds other than reaction product fibers and water which are contained in the reaction slurry, such as unreacted hypochlorous acid, and various byproducts removed to the outside of the system in the work up step, but since the reaction product fibers are not dispersed usually in pieces of a nanofiber unit at the above stage, a dispersion of the reaction product fibers having a high purity (99% by mass or more) and water is prepared by an ordinary work up method, that is, repeating washing with water and filtering. In the work up method in the above work up step, any equipments may be used as is the case with a method (for example, continuous decanter) carried out by utilizing the centrifugal spin-dry as long as they are equipments by which the object described above can be achieved.

The aqueous dispersion of the reaction product fibers stays in range of about 10 to 50% by mass in terms of solid content (cellulose) concentration in a squeezed state. When the reaction product fibers are dispersed to nanofibers in the subsequent step, a very high energy is required for dispersion if solid content concentration is higher than 50% by mass, and therefore high concentration is not preferred.

Further, in the present invention, the reaction product fibers (aqueous dispersion) impregnated with water obtained in the work up step described above is dispersed in a solvent and subjected to dispersion treatment, whereby a dispersion of the oxidized cellulose can be obtained, and the above dispersion can be dried to prepare the oxidized cellulose to be used.

In this regard, usually the solvent used as the dispersant is preferably water, but in addition to water, alcohols (such as methanol, ethanol, isopropanol, isobutanol, sec-butanol, tert-butanol, methyl cellosolve, ethyl cellosolve, ethylene glycol, and glycerin) which are soluble in water, ethers (such as ethylene glycol dimethyl ether, 1,4-dioxane, and tetrahydrofuran), ketones (such as acetone and methyl ethyl ketone), N,N-dimethylformamide, N,N-dimethylacetamide, dimethyl sulfoxide, and the like may be used according to the objects. Also, the mixtures of the above compounds can suitably be used as well. Further, when the reaction product fibers described above are diluted and dispersed by the solvents, the dispersions of the fibers of a nano-level can efficiently be obtained in a certain case by trying stepwise dispersion in which a solvent is added little by little for dispersion. From the viewpoint of manipulation, the dispersion conditions can be selected so that the state of the dispersion after the dispersion step is viscous or gelatinous. The oxidized cellulose used may be the dispersion of the oxidized cellulose described above.

The production process for the oxidized cellulose which can be used in the present invention shall not specifically be restricted to the production process described above as long as a part of the hydroxyl groups (-OH groups) of the cellulose described above is modified by at least one functional group of an aldehyde group (-CHO) and a carboxyl group (-COOH group).

### <Aqueous ink composition for a writing instrument>

The aqueous ink composition for a writing instrument according to the present invention is characterized by comprising at least 0.05 to 1.5% by mass of the oxidized cellulose described above and 0.001 to 30% by mass of the sugars having a weight average molecular weight of 5000 or less, and the composition is used, for example, as an ink composition for writing instruments such as aqueous ink ballpoint pens.

In the present invention, content (solid content) of the oxidized cellulose described above is 0.05 to 1.5% by mass (hereinafter referred to merely as %), preferably 0.1 to 1.0% based on the aqueous ink composition for a writing instrument (total amount).

If content of the above oxidized cellulose is less than 0.05%, the satisfactory thickening action is not obtained, and solid matters such as the pigment settle down with the passage of time in certain cases. On the other hand, if content exceeds 1.5%, the viscosity grows high, and therefore a splitting phenomenon of the drawn lines and inferior discharge of the ink are brought about in certain cases. Accordingly, both are not preferred.

The sugars having a weight average molecular weight of 5000 or less used in the present invention are a component which inhibits time-dependent heterogeneity (difference in viscosity between up- and down-sides) in viscosity distribution observed when the oxidized cellulose is used, and capable of being used are monosaccharides, disaccharides, oligosaccharide, reducing sugars, non-reducing sugars, sugar alcohols, hydrogenated starch hydrolyzate, and mixtures thereof. Among sugars, non-reducing sugars, particularly sugar alcohols are preferred. Sugars having reducing property cause discoloration with the passage of time or bring about a fluctuation in pH in certain cases. When sugars having a weight average molecular weight exceeding 5000, for example, polysaccharide thickeners such as xanthane gum are used, rheologic properties exerted by the oxidized cellulose are inhibited in a certain case by a thickening action of the polysaccharide thickeners, and therefore polysaccharide thickeners are not preferred.

The non-reducing sugars which can be used shall not specifically be restricted as long as non-reducing sugars are sugars showing no reducing property, and non-reducing sugars include, for example, sucrose, trehalose, sugar alcohols and the like. The non-reducing sugars are sugars having a weight average molecular weight of 5000 or less.

Reducing sugars such as glucose (grape sugar) are sugars showing a weak reducing property by having a carbonyl group (a reducing group) such as an aldehyde group and a ketone group which are present in a molecule, but a reducing group of a monosaccharide in the non-reducing sugars used in the present invention is bonded to the other sugars via a glycosidic bond, and therefore non-reducing sugars do not show reducing property.

The sugar alcohols which can be used are a general term of linear polyols obtained by reduction (hydrogenation) of carbonyl groups present in sugars. The sugar alcohols which can be used include, for example, "sorbitol" obtained by reduction of glucose, "maltitol" obtained by reduction of maltose, hydrogenated starch hydrolyzate (reduced starch syrup) obtained by reduction of starch syrup and dextrin which are different in a saccharification, reduction dextrin, erythritol, pentaerythritol, and the like. Commercial products are available.

Among the above non-reducing sugars, at least one selected from sorbitol, erythritol, pentaerythritol, trehalose, and the hydrogenated starch hydrolyzate are preferably used from the viewpoint of higher time-dependent stability.

Content of the above sugars having a weight average molecular weight of 5000 or less is 0.001 to 30%, preferably 0.01 to 10% based on a total amount of the aqueous ink composition.

If the above content is less than 0.001%, the effects of the present invention are not sufficiently exerted, and therefore less content is not preferred. On the other hand, if content exceeds 30%, drying property of the drawn lines is deteriorated, and therefore excess content is not preferred as well.

At least a colorant and a water-soluble solvent in addition to the oxidized cellulose and the sugars having a weight average molecular weight of 5000 or less each described above are contained in the aqueous ink composition for a writing instrument according to the present invention.

The usable colorant includes pigments and/or water-soluble dyes. The kind of the pigments shall not specifically be restricted, and optional ones selected from inorganic and organic pigments which have so far conventionally been used for writing instruments such as aqueous ink ballpoint pens can be used.

The inorganic pigments include, for example, carbon blacks and metal powders.

The organic pigments include, for example, azo lakes, insoluble azo pigments, chelated azo pigments, phthalocyanine pigments, perylene and perynone pigments, anthraquinone pigments, quinacridone pigments, dye lakes, nitro pigments, and nitroso pigments. To be specific, capable of being used are phthalocyanine blue (C. I. 74160), phthalocyanine green (C. I. 74260), Hansa yellow 3G (C. I. 11670), diazo yellow GR (C. I. 21100), permanent red 4R (C. I. 12335), brilliant carmine 6B (C. I. 15850), and quinacridone red (C. I. 46500), and the like.

Also, plastic pigments constituted from particles of styrene and acryl resins can be used as well. Further, hollow resin particles having voids in the insides of the particles can be used as white pigments, or resin particles (pseudo pigments) colored with basic dyes described later which are excellent in color developability and dispersibility can be used as well.

All of direct dyes, acid dyes, food dyes and basic dyes can be used as the water-soluble dye.

The direct dyes include, for example, C. I. Direct Blacks 17, 19, 22, 32, 38, 51 and 71, C. I. Direct Yellows 4, 26, 44 and 50, C. I. Direct Reds 1, 4, 23, 31, 37, 39, 75, 80, 81, 83, 225, 226 and 227, and C. I. Direct Blues 1, 15, 71, 86, 106, and 119.

The acid dyes include, for example, C. I. Acid Blacks 1, 2, 24, 26, 31, 52, 107, 109, 110, 119, and 154, C.I. Acid Yellows 7, 17, 19, 23, 25, 29, 38, 42, 49, 61, 72, 78, 110, 127, 135, 141, and 142, C.I. Acid Reds 8, 9, 14, 18, 26, 27, 35, 37, 51, 52, 57, 82, 87, 92, 94, 115, 129, 131, 186, 249, 254, 265, and 276, C.I. Acid Violets 18 and 17, C.I. Acid Blues 1, 7, 9, 22, 23, 25, 40, 41, 43, 62, 78, 83, 90, 93, 103, 112, 113, and 158, and C.I. Acid Greens 3, 9, 16, 25 and 27.

A large part of the food dyes is included in the direct dyes or the acid dyes, and one example which is not included therein includes C.I. Food Yellow 3.

The basic dyes include, for example, C. I. Basic Yellows 1, 2 and 21, C. I. Basic Oranges 2, 14 and 32, C. I. Basic Reds 1, 2, 9 and 14, C. I. Basic Brown 12, and C. I. Basic Blacks 2 and 8.

Also, the resin particles colored with the basic dyes include fluorescent pigments obtained by coloring resin particles of acrylonitrile base copolymers with basic fluorescent dyes. The specific trade names thereof include Sinloihi Color SF series (manufactured by Sinloihi Co., Ltd.), NKW and NKP series (manufactured by Nippon Fluorescent Chemical Co., Ltd.), and the like.

The above colorants may be used alone respectively or in combination of two or more kinds thereof. Content of the colorant based on total amount of the aqueous ink composition for a writing instrument falls in a range of usually 0.5 to 30%, preferably 1 to 15%.

If content of the above colorant is less than 0.5%, the ink composition is weakly colored, or a hue of the handwritings becomes indefinite in a certain case. On the other hand, if the colorant is added in excess of 30%, inferior writing is brought about in a certain case. Accordingly, both are not preferred.

The water-soluble organic solvent which can be used includes, for example, glycols such as ethylene glycol, diethylene glycol, triethylene glycol, propylene glycol, polyethylene glycol, 3-butylene glycol, thiodiethylene glycol, and glycerin, ethylene glycol monomethyl ether, diethylene glycol monomethyl ether, and the like, and the water-soluble solvent can be used alone or in a mixture. Content of the above water-soluble organic solvents is preferably 5 to 40% based on a total amount of the aqueous ink composition for a writing instrument.

The aqueous ink composition for a writing instrument according to the present invention can suitably contain, in addition to the oxidized cellulose, the sugars having a weight average molecular weight of 5000 or less, the colorant and the water-soluble organic solvent each the described above, a dispersant, a lubricant, a pH modifier, a rust preventive, a preservative or a fungicide, and the like as well as water (such as tap water, refined water, distilled water, ion-exchanged water, and purified water) as a balance which is a solvent, as long as the effects of the present invention are not deteriorated.

When the pigment is used as the colorant, the dispersant is preferably used. The dispersant has an action to adsorb on the surface of the pigment to enhance an affinity thereof with water and disperse stably the pigment in water. Nonionic and anionic surfactants and water-soluble resins are used as the dispersant. Water-soluble polymers are preferably used.

The lubricant includes nonionic surfactants such as fatty acid esters of polyols which are also used as a surface treating agent for pigments, higher fatty acid esters of sugars, polyoxyalkylene higher fatty acid esters, and alkylphosphate esters, anionic surfactants such as alkylsulfonate salts and alkylarylsulfonate salts of higher fatty acid amides, derivatives of polyalkylene glycols, fluorine base surfactants, polyether-modified silicones, and the like.

The pH modifier includes ammonia, urea, monoethanolamine, diethanolamine, triethanolamine, alkali metal salts of carbonic acid and phosphoric acid such as sodium tripolyphosphate and sodium carbonate, hydrates of alkali metals such as sodium hydroxide. Also, the rust preventive includes benzotriazole, tolyltriazole, dicyclohexylammonium nitrite, saponins, and the like, and the preservative or the fungicide includes phenol, sodium omadine, sodium benzoate, benzimidazole base compounds, and the like.

The aqueous ink composition for a writing instrument according to the present invention can be prepared by suitably combining the oxidized cellulose, the sugars having a weight average molecular weight of 5000 or less, the colorant, the water-soluble organic solvent and the other respective components each described above according to the uses of the inks for writing instruments (such as ballpoint pens and marking pens) to stir and mix components by means of a stirring device such as a homomixer, a homogenizer, and a disperser, and removing, if necessary, coarse particles in the ink composition by filtration or centrifugal separation.

In the case of an aqueous ink ballpoint pen, the ballpoint pen can be prepared by charging an aqueous ink ballpoint pen body equipped with a ball having a diameter of 0.18 to 2.0 mm with the above aqueous ink composition for a writing instrument.

The aqueous ink ballpoint pen body used shall not specifically be restricted as long as the pen body is equipped with a ball having a diameter falling in the range described above, and particularly preferred is an aqueous ink ballpoint pen equipped with a refill having a stainless steel tip (cemented carbide-made ball) at a point, which is finished by charging an ink reservoir of a polypropylene tube with the aqueous ink composition described above.

A production method for the aqueous ink composition for a writing instrument according to the present invention is not specifically different from other production methods for aqueous ink compositions, and the aqueous ink composition of the present invention can be produced by the production method for other aqueous ink compositions.

That is, the aqueous ink composition for a writing instrument according to the present invention is obtained by mixing and stirring the respective components including the oxidized cellulose and the sugars having a weight average molecular weight of 5000 or less each described above under conditions set to suitable ones by means of a mixer and the like and further, for example, a bead mill, a homomixer, a homogenizer, a high-pressure homogenizer, an ultrasonic homogenizer, and a high-pressure wet media-less atomizing device, and the like which can carry out strong shearing, whereby a thixotropic ink (for example, an ink for a gel ink aqueous ink ballpoint pen) can be produced.

Also, a pH (25°C) of the aqueous ink composition for a writing instrument according to the present invention is controlled preferably to 5 to 10 by a pH controlling agent from the viewpoints of usability, safety, stability of the ink itself, and matching property with the ink reservoir, and the pH is controlled more preferably to 6 to 9.5.

The aqueous ink composition for a writing instrument according to the present invention is charged into ballpoint pens and marking pens and the like which are equipped with pen tip parts such as ballpoint pen tips, fiber tips, felt tips, and plastic tips.

The ballpoint pen in the present invention includes pens obtained by charging an ink reservoir (refill) for a ballpoint pen with the aqueous ink composition for a writing instrument having the composition described above and charging the above ink reservoir with a substance as an ink follower, wherein the substance is not compatible with the aqueous ink composition stored in the above ink reservoir and has a smaller specific gravity than that of the above aqueous ink composition, and the substance includes, for example, polybutene, silicone oils, and mineral oils.

The structures of the ballpoint pen and the marking open shall not specifically be restricted, and the structures may be, for example, free ink ballpoint pens and marking pens provided with a collector structure (ink-holding mechanism) in which a holder itself is used as an ink reservoir and in which the aqueous ink composition for a writing instrument having the constitution described above is charged in the above holder.

In the aqueous ink composition for a writing instrument according to the present invention thus constituted, the oxidized cellulose used shows a high viscosity even at a low viscosity of 0.05 to 1.5% in the aqueous ink composition for a writing instrument and shows high thixotropy index which is inherent to cellulose, and therefore it exerts a rheology-controlling effect as a thickener and gelling agent for aqueous ink compositions for writing instruments in a smaller amount than those of a conventional fine cellulose and xanthan gum. In addition thereto, time-dependent heterogeneity (difference in viscosity between up- and down-sides) in viscosity distribution observed when the oxidized cellulose is used is inhibited by adding 0.001 to 30% by mass of the sugars having a weight average molecular weight of 5000 or less to the ink composition, whereby obtained is the aqueous ink composition for a writing instrument which is excellent in time-dependent viscosity distribution stability.

### EXAMPLES

Next, the present invention shall be explained in further details with reference to examples and comparative examples, but the present invention shall not be restricted to the examples shown below.

### Examples 1 to 5 and Comparative Examples 1 to 3

The oxidized cellulose having the following physical properties was used to prepare the prescribed amounts of the respective aqueous ink compositions for a writing instrument according to blend compositions shown in the following Table 1, to be specific, the blend compositions of the sugars having a weight average molecular weight of 5000 or less, the colorant and the like by mixing and stirring the components by a wet method with a high-pressure wet media-less atomizing device (Nano Vater manufactured by Yoshida Kikai Co., Ltd.) while suitably changing stirring conditions (a shearing force, a pressure and a stirring time) and carrying out filtration by a bag filter of 10 µm. The pH values of the respective aqueous ink compositions for a writing instrument were measured at room temperature (25°C) by means of a pH meter (manufactured by HORIBA, Ltd.) to find that the pH values of the respective aqueous ink compositions fell in a range of 7.9 to 8.2.

The aqueous ink compositions for a writing instrument obtained in Examples 1 to 5 and Comparative Examples 1 to 3 were used to measure viscosity values by the following method.

In measuring the viscosity values, the inks were stored in a glass bottle 2.5 × 2.5 × 5 cm (an ink charged height (height from a bottom in the bottle up to an upper surface of the ink charged): 4 cm) at room temperature for a month. Then, the ink in the vicinity of an up-side (the vicinity of 0.5 cm from the surface of the ink charged height) of the glass bottle was sampled by means of a syringe, and the ink in the vicinity of a down-side (the vicinity of 0.5 cm from the bottom of the ink charged height) of the glass bottle was sampled in the same manner as described above to measure viscosity values at the shear rates of 38.3⁻¹ at 25°C by means of an EMD type viscometer (manufactured by Tokyo Keiki Inc.). In the present invention, a ratio of an up-side value to a down-side value (up-side value/down-side value) of the viscosity in a good viscosity distribution falls in a range of preferably 0.9 to 2.

Next, the aqueous ink compositions for a writing instrument obtained in Examples 1 to 5 and Comparative Examples 1 to 3 were used to prepare aqueous ink ballpoint pens by the following method, and the ballpoint pens were used to evaluate a writing property (difference in intensity between up-side and down-side drawn lines). The results thereof are shown in the following Table 1.

### Oxidized cellulose used:

An undried sulfurous acid-bleached softwood pulp (comprising principally fibers having a fiber diameter exceeding 1000 nm) corresponding to 2 g in terms of a dried weight, 0.025 g of TEMPO and 0.25 g of sodium bromide were dispersed in 150 ml of water, and then a 13 weight% of aqueous sodium hypochlorite solution was added thereto so that an amount of sodium hypochlorite was 2.5 mmol based on 1 g of the pulp, whereby the reaction was initiated. A 0.5 M of aqueous sodium hydroxide solution was dropwisely added during the reaction to maintain the pH at 10.5. The reaction was regarded as finished at a point of time when the pH was not observed to be changed, and the reactant was filtrated through a glass filter, followed by repeating five times washing with a sufficiently large amount of water and filtration to obtain reaction product fibers impregnated with water having a solid content of 25% by mass.

Next, water was added to the above reaction product fibers to prepare a 2 mass% slurry, and the slurry was treated for about 5 minutes by means of a rotary blade type mixer. The slurry was increased notably in a viscosity as the treatment advanced, and therefore water was added little by litter to continue the dispersion treatment by the mixer until the solid concentration reached 0.15% by mass. The dispersion of the oxidized cellulose thus obtained having a cellulose concentration of 0.15% by mass was subjected to centrifugal separation to thereby remove floating matters, and then the concentration was modified by water to obtain the transparent and slightly viscous dispersion of the oxidized cellulose having a cellulose concentration of 0.1% by mass. The oxidized cellulose obtained by drying the above dispersion was used. The oxidized celluloses shown in the respective examples and the like in Table 1 were shown in terms of a solid concentration of the oxidized celluloses produced in the respective examples and the like.

A number average fiber diameter of the oxidized celluloses obtained above was confirmed and measured by the following method.

### <Number average fiber diameter>

A number average fiber diameter of the oxidized cellulose was measured in the following manner.

That is, a sample prepared by diluting the oxidized cellulose by adding water was dispersed for 15 minutes by means of a homomixer at 12000 rpm, and then the dispersion was casted on a grid coated by a carbon film which was subjected to hydrophilic treatment. This was observed under a transmission electron microscope (TEM), and the number average fiber diameter was calculated from the image obtained above to result in finding that the number average fiber diameter was about 140 nm.

### <Confirmation of cellulose I form crystal structure>

It was confirmed in the following manner that the oxidized cellulose used had a cellulose I form crystal structure.

That is, it was confirmed that the oxidized cellulose had an I form crystal structure since in a diffraction profile obtained by measuring a large angle X ray diffraction image, typical peaks are present in two positions in the vicinity of 2theta = 14 to 17° and the vicinity of 2theta = 22 to 23°.

### Preparation of aqueous ink ballpoint pens:

The respective ink compositions obtained above were used to prepare aqueous ballpoint pens. To be specific, a holder of a ballpoint pen (trade name: Signo UM-100, manufactured by Mitsubishi Pencil Co., Ltd.) was used to charge each of the inks described above into a refill comprising a polypropylene-made ink reservoir having an inner diameter of 4.0 mm and a length of 113 mm, a stainless steel-made tip (cemented carbide ball, ball diameter: 0.7 mm), and a joint connecting the above reservoir with the tip, and an ink follower comprising a mineral oil as a principal component was loaded at a rear end of the ink, whereby an aqueous ink ballpoint pen was prepared.

### Evaluation method of writing property (difference in intensity between up-side and down-side drawn lines):

The respective aqueous ink ballpoint pens obtained were left standing at room temperature for one month and then carried out writing to use up, and a difference in intensity between the drawn lines in the initial of writing and the final of writing was compared and evaluated according to the following evaluation criteria.

Evaluation criteria:
○: no difference in intensity was observed
Δ: a little difference in intensity was observed
×: difference in intensity was clearly observed

**Table 1**

| (Total: 100% by mass) | | | | | | | | | |
|---|---|---|---|---|---|---|---|---|---|
| | | Example 1 | Example 2 | Example 3 | Example 4 | Example 5 | Comparative Example 1 | Comparative Example 2 | Comparative Example 3 |
| Colorant (Pigment) | FUJI RED 2510 (manufactured by Fuji Pigment Co., Ltd.) | 8 | 8 | 8 | 8 | 8 | 8 | 8 | 8 |
| Colorant dispersant | JONCRYL 61J (manufactured by BASF JAPAN Ltd.) | 6 | 6 | 6 | 6 | 6 | 6 | 6 | 6 |
| Thickener | Oxidized cellulose | 0.19 | 0.2 | 0.21 | 0.15 | 0.16 | 0.21 | 0.2 | 0.15 |
| Sugars | Hydrogenated Starch Hydrolysate (Sugar alcohol, H-PDX: manufactured by Matsutani Chemical industry Co,. Ltd.) | 0.5 | 6 | | | | | | |
| | Sorbitol (Sugar alcohol) | | | 3 | 6 | | | | |
| | Trehalose (non-reducing disaccharides) | | | | | 6 | | | |
| Lubricant | RD-510Y (manufactured by Toho Chemical Industry Co., Ltd.) | 0.5 | 0.5 | 0.5 | 0.5 | 0.5 | 0.5 | 0.5 | 0.5 |
| Preservative | Bioden 421 (manufactured by Nippon Soda Co., Ltd.) | 0.2 | 0.2 | 0.2 | 0.2 | 0.2 | 0.2 | 0.2 | 0.2 |
| Rust preventive | Benzotriazole | 0.3 | 0.3 | 0.3 | 0.3 | 0.3 | 0.3 | 0.3 | 0.3 |
| pH modifier | Triethanolamine | 1.4 | 1.4 | 1.4 | 1.4 | 1.4 | 1.4 | 1.4 | 1.4 |
| Water-soluble organic solvent | Propyrene glycol | 15 | 15 | 15 | 15 | 15 | 15 | 15 | 15 |
| Water | Ion-exchanged water | 67.91 | 62.4 | 65.39 | 62.45 | 62.44 | 68.39 | 68.4 | 68.45 |
| Viscosity (mPa·s. 38.3/s) | up-side | 99 | 72 | 81 | 62 | 73 | 181 | 179 | 121 |
| | down-side | 66 | 76 | 73 | 62 | 84 | 42 | 31 | 19 |
| | ratio between up- and down-sides (up-side / down-side) | 1.50 | 0.95 | 1.11 | 1.00 | 0.87 | 4.31 | 5.77 | 6.37 |
| Writing Property (difference in intensity between up- and down-sides) | | ○ | ○ | ○ | ○ | ○ | × | × | × |

As apparent from the results summarized in Table 1 shown above, it has become clear that the aqueous ink compositions for a writing instrument prepared in Examples 1 to 5 according to the present invention are maintained in a satisfactory homogeneity in viscosity distribution with the passage of time and free of a difference in intensity between up-side and down-side drawn lines and that the aqueous ink compositions are excellent in a writing property.

### Industrial Applicability

Obtained is an aqueous ink composition for a writing instrument which is suited to writing instruments such as aqueous ballpoint pens and marking pens.

## Claims

1. An aqueous ink composition for a writing instrument comprising at least:
0.05 to 1.5% by mass of an oxidized cellulose and
0.001 to 30% by mass of sugars having a weight average molecular weight of 5000 or less.

2. The aqueous ink composition for a writing instrument as described in claim 1, wherein the sugars are non-reducing sugars.

3. The aqueous ink composition for a writing instrument as described in claim 2, wherein the non-reducing sugars are sugar alcohols.

4. A writing instrument charged with the aqueous ink composition for a writing instrument as described in any one of claims 1 to 3.
